# EUROPEAN PATENT SPECIFICATION

(11) **EP 1 001 358 B1**
(45) Date of publication and mention of the grant of the patent: **19.05.2004**
(21) Application number: 99307841.9
(22) Date of filing: 05.10.1999
(51) Int. Cl.: G06F 17/60, G06F 1/00

(54) **Data processing system for integrated business solution**
Datenverarbeitungssystem für integrierte Unternehmenslösungen
Système de traitement de données pour des solutions integrées d'entreprises

(30) Priority: 10.11.1998 GB 9824523
(43) Date of publication of application: 17.05.2000
(73) Proprietor: Fujitsu Services Limited, London, EC2A 1SL (GB)
(72) Inventor: Greenaway, Nigel John, Reading, Berkshire RG1 6DX (GB)
(74) Representative: Guyatt, Derek Charles

(56) References cited:
- EP-A- 0 863 453
- WO-A-00/60504
- US-A- 5 566 319
- US-A- 5 598 562
- US-A- 5 826 239
- MARK TURRELL: "Learning through Experience: How Companies are using Groupware" GROUPWARE '95 EUROPE, [Online] 13 May 1996 (1996-05-13), XP002180412 London Retrieved from the Internet: <URL:http://www.keysolutions.com/NotesFAQ/ city.html> [retrieved on 2001-10-17]
- CRAIG W. BORYSOWICH: "Lotus Notes and The World Wide Web - A New Partnership?" CRAIG W. BORYSOWICH'S NOTES VS. WWW ARTICLE, [Online] 13 May 1996 (1996-05-13), XP002180413 Retrieved from the Internet: <URL:http://www.keysolutions.com/NotesFAQ/ craig.html> [retrieved on 2001-10-17]
- CRAIG W. BORYSOWICH: "The Once and Future Groupware King May be 1997's Killer App" CRAIG W. BORYSOWICH'S NOTES VS. WWW ARTICLE (1997 VERSION), [Online] 18 September 1997 (1997-09-18), XP002180414 Retrieved from the Internet: <URL:http://www.keysolutions.com/NotesFAQ/ craigw.html> [retrieved on 2001-10-17]
- THOMAS KOCH: "Groupware on the Internet" DIPLOMA THESIS, [Online] August 1998 (1998-08), XP002180637 Graz, AT Retrieved from the Internet: <URL:http://www.lib-online.com/thesis/koch > [retrieved on 2001-10-18]

## Description

### Background to the Invention

This invention relates to data processing systems for providing integrated business solutions. The invention is particularly, although not exclusively, concerned with providing an integrated business solution in an environment in which a number of different organisations collaborate or co-operate in some way. For example, local authorities often collaborate with outside organisations to deliver their services to the public. Moreover, within a local authority, different departments may co-operate with each other. In such an environment, it would clearly be desirable to provide a single integrated business solution, spanning all the collaborating organisations.

However, a problem with this is that the different organisations may not trust each other to handle and maintain their data properly. This is particularly important where personal data is involved and it is necessary to comply with data protection legislation. Additionally, separation may be required to facilitate organisational restructuring such as divestment or to support a set of similar trading partnerships with a number of similar suppliers. For these reasons, each organisation may decide to implement its own data processing system, and to maintain its own data, separately from the others. Clearly, this can be inefficient. In particular, it may lead to duplication of effort, such as having to enter the same data several times in the different organisations. Also, it may lead to inconsistencies between the data held by the different organisations.

The object of the present invention is to provide a way of reducing or overcoming this problem.

EP 0 863 453 describes a shared-data environment in which a number of users can access shared files, for example over an intranet or internet.

According to the invention, there is provided a data processing system and method as claimed in the appended claims 1 and 2.

It can be seen that because each organisation manages its own business domain, the problem of lack of trust between the organisations is addressed. At the same time, the register domain provides a way of enabling common data to be entered once only, and for ensuring consistency between the domains.

### Brief Description of the Drawings

Figure 1 is a block schematic diagram showing the logical structure of a data processing system.

Figure 2 is a block schematic diagram showing the physical structure of the data processing system.

Figure 3 is a flow chart showing a process for accessing a data item.

### Description of an Embodiment of the Invention

One data processing system in accordance with the invention will now be described by way of example with reference to the accompanying drawings.

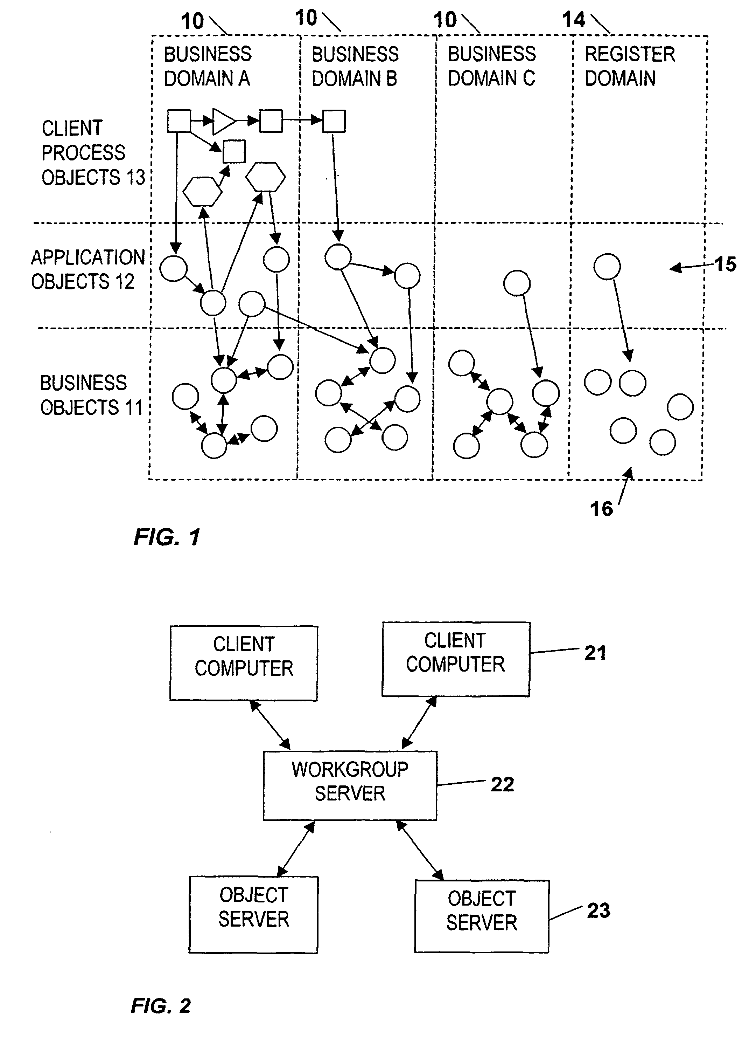

Figure 1 shows the logical structure of the data processing system. The system is partitioned into a number of business domains 10, each of which belongs to a particular organisation. For example, in a local government system, business domains 10 may be owned by local government departments that deal respectively with Business Rates, Council Tax, and Housing Benefit. Each business domain is managed and controlled by the organisation (e.g. department) that owns it.

Each of the business domains includes a number of business objects 11, application objects 12, and client process objects 13. The exact nature of these objects does not form any part of the present invention and so they will not be described in detail. Briefly, however, the business objects 11 represent the real-world objects that are of interest to the organisation: for example, individual persons may be represented by Person objects, their addresses by Address objects, and so on. The application objects 12 implement processes that may be performed on the business objects, such as calculating the amount of Council Tax due from an individual or business. The client process objects 13 automate the various workflow processes to be performed by the organisation, such as registering new residents and sending out tax demands.

Underlying each of the business objects 11 is a database schema, representing the data structure of that object. These schemas may be supported by separate databases. However, if all the business objects within a particular domain are implemented on the same computer platform, then the schemas for those business objects may all be supported by a single database. The potential to distribute business objects and their underlying databases provides deployment flexibility and builds-in scalability and flexibility.

Each business domain manages its own data, and is responsible for its integrity. In particular, each business domain is responsible for backing up its own data, keeping it secure, and ensuring it is consistent.

The application objects 12 generally access only the business objects in their own domain. However, as shown, some of the application objects may be permitted to access application or business objects in other domains, where there is an agreement between the owners of those domains to allow this.

The client process objects 13 pass messages to each other, according to the required workflow. It should be noted that some of the processes may cross domain boundaries. However, each domain is responsible for its own part of the process.

The system also includes a further domain 14, referred to as the register domain. This includes a number of application objects 15 that control business objects 16, representing data items that are common to two or more of the business domains. In this example, it is assumed that the register domain includes Person objects, which hold basic details about a person, and Address objects.

Each of the domains 10, 14 manages its own security, including security at the domain boundary that enables or prohibits interaction between domains.

Figure 2 shows the physical structure of the data processing system. There are three hardware levels. The first level comprises a number of client computers 21, which may be personal computers (PCs) or network computers (NCs), meeting the needs of individuals. The second level comprises a number of workgroup server computers 22, meeting the needs of teams, units or organisations. The third level comprises a number of object server computers 23, meeting needs across business processes. The computers 21-23 communicate with each other over the Internet, or an Intranet, using TCP/IP protocols.

The logical structure of the system, as depicted in Figure 1, may be mapped on to the hardware, as depicted in Figure 2, in various ways. For example, the business objects 11 may reside in the object server computers 23; the application objects 12 may reside in the workgroup server computers 22; and the client process objects 13 may reside in the client computers 21.

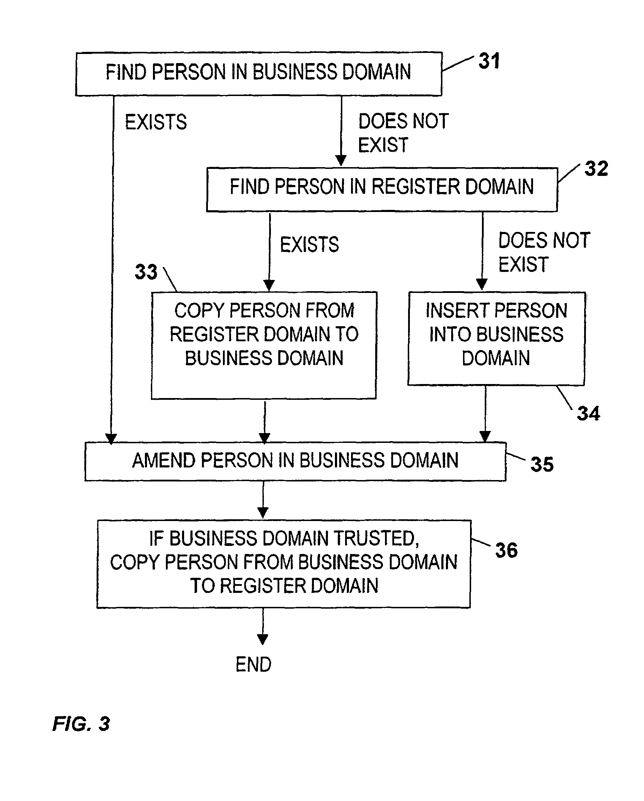

When an application object 12 in one of the business domains 10 wishes to access a particular Person object, it performs the process shown in Figure 3.

The process first checks whether the Person object already exists in its own business domain (Step 31). If so, the object can simply be accessed from this domain, and amended if required (Step 35).

If the Person object does not exist in this business domain, the process accesses the Register domain, to check whether the Person object in question exists in the Register domain (Step 32). If so, the process copies the Person object from the Register domain into its own business domain (Step 33). The application object can then access the Person object in this business domain, and perform any amendments on it as required (Step 35).

If, however, the Person object does not exist in the register domain, the process creates a new Person object in its own business domain (Step 34).

Finally (Step 36), the process checks whether this business domain is trusted to make updates to the register domain. For example, within local government, the Council Tax department might be regarded as trusted to make such updates, while a Sports and Leisure Department might not. If the business domain is trusted, the Person object is copied from the business domain into the Register domain. This will involve either creating a new Person object in the register domain (in the case where the object does not already exist in the register domain), or replacing the existing object with an amended version.

Similar processes are provided for accessing other shared objects, such as Address objects, and for deleting shared objects from a business domain.

In summary, it can be seen that since each organisation (e.g. department) is responsible for managing the data in its own domain, problems of lack of trust and data protection issues are reduced or overcome. Also, a failure in one domain will not affect the other domains.

The use of the register domain provides a mechanism for enabling common data to be entered just once. This avoids duplication of effort and helps to ensure consistency of data between the domains. In addition, the creation of the register domain may provide a valuable resource, which can be used in the provision of new services, such as case management.

### Some possible modifications

It will be appreciated that many modifications may be made to the system described above without departing from the scope of the present invention. For example, although local government organisations have been referred to, it will be appreciated that the invention could equally well be used with other types of organisation.

## Claims

1. A data processing system wherein:
(a) the system is logically divided into a plurality of co-operating domains (10) and a register domain (14);
(b) each of the co-operating domains (10) is managed by a separate organisation and comprises means for managing its own security, including security at the domain boundary that enables or prohibits interaction with other domains;
(c) each of the co-operating domains (10) and the register domain (14) holds a respective set of persistent data items; and
(d) each of the co-operating domains (10) includes at least one application object (12) for performing a process within this domain;
***characterised in that*** the application object (12) includes means for performing the following process:
(i) checking whether a required data item exists in this co-operating domain and, if so, accessing the required data item in this domain;
(ii) if the required data item does not exist in this co-operating domain, checking whether the required data item exists in the register domain and, if so, accessing the required data item in the register domain and copying it into this co-operating domain;
(iii) amending or creating a data item in this co-operating domain; and
(iv) checking whether this co-operating domain is trusted to make updates to the register domain and, if so, copying the amended or created data item into the register domain.

2. A method of operating a data processing system wherein:
(a) the system is logically divided into a plurality of co-operating domains (10) and a register domain (14);
(b) each of the co-operating domains (10) is managed by a separate organisation and comprises means for managing its own security, including security at the domain boundary that enables or prohibits interaction with other domains;
(c) each of the co-operating domains (10) and the register domain (14) holds a respective set of persistent data items; and
(d) each of the co-operating domains (10) includes at least one application object (12) for performing a process within this domain;
***characterised in that*** the method includes the application objects (12) in each of the co-operating domains (10) performing the steps:
(i) checking whether a required data item exists in this co-operating domain and, if so, accessing the required data item in this domain;
(ii) if the required data item does not exist in this co-operating domain, checking whether the required data item exists in the register domain and, if so, accessing the required data item in the register domain and copying it into this co-operating domain;
(iii) amending or creating a data item in this co-operating domain; and
(iv) checking whether this co-operating domain is trusted to make updates to the register domain and, if so, copying the amended or created data item into the register domain.

## Patentansprüche

1. Datenverarbeitungssystem, bei dem
(a) das System logisch in eine Vielzahl von miteinander zusammenwirkenden Domänen (10) und eine Register-Domäne (14) unterteilt ist,
(b) jede der miteinander zusammenwirkenden Domänen (10) durch eine getrennte Organisation gemanagt wird und eine Vorrichtung zum Managen der eigenen Sicherheit aufweist, einschließlich der Sicherheit an der Domänen-Grenze, die ein Zusammenarbeiten mit anderen Domänen ermöglicht oder verhindert,
(c) jede der miteinander zusammenwirkenden Domänen (10) und der Register-Domäne (14) einen entsprechenden Satz von nachhaltigen Datenausdrücken hält, und
(d) jede der miteinander zusammenwirkenden Domänen (10) mindestens ein Anwendungs-Objekt (12) enthält, um einen Prozess innerhalb dieser Domäne durchzuführen,
**dadurch gekennzeichnet, dass** das Anwendungs-Objekt (12) eine Vorrichtung zur Durchführung des folgenden Prozesses aufweist:
(i) Prüfen, ob ein gewünschter Datenausdruck in dieser zusammenwirkenden Domäne existiert und, wenn dies der Fall ist, Zugriff zu dem gewünschten Datenausdruck in dieser Domäne,
(ii) wenn der gewünschte Datenausdruck in dieser zusammenwirkenden Domäne nicht existiert, prüfen, ob der gewünschte Datenausdruck in der Register-Domäne vorhanden ist, und wenn dies der Fall ist, Zugriff zu dem gewünschten Datenausdruck in der Register-Domäne und Kopieren dieses Ausdruckes in die zusammenwirkende Domäne,
(iii) Verbessern oder Kreieren eines Datenausdruckes in dieser zusammenwirkenden Domäne, und
(iv) Prüfen, ob diese zusammenwirkende Domäne berechtigt ist, Fortschaltungen an der Register-Domäne durchzuführen, und, wenn dies der Fall ist, Kopieren des verbesserten oder kreierten Datenausdruckes in die Register-Domäne.

2. Verfahren zum Betreiben eines Datenverarbeitungssystems, bei dem
(a) das System logisch in eine Vielzahl von miteinander zusammenwirkenden Domänen (10) und eine Register-Domäne (14) unterteilt wird,
(b) jede der miteinander zusammenwirkenden Domänen (10) durch eine getrennte Organisation gemanagt wird und eine Vorrichtung zum Managen der eigenen Sicherheit aufweist, einschließlich der Sicherheit an der Domänen-Grenze, die ein Zusammenarbeiten mit anderen Domänen ermöglicht oder verhindert,
(c) jede der miteinander zusammenwirkenden Domänen (10) und der Register-Domäne (14) einen entsprechenden Satz von nachhaltigen Datenausdrücken hält, und
(d) jede der miteinander zusammenwirkenden Domänen (10) mindestens ein Anwendungs-Objekt (12) enthält, um einen Prozess innerhalb dieser Domäne durchzuführen,
**dadurch gekennzeichnet, dass** das Verfahren die Anwendungs-Objekte (12) in jedem der miteinander zusammenwirkenden Domänen umfaßt, die die folgenden Schritte durchführen:
(i) Prüfen, ob ein gewünschter Datenausdruck in dieser zusammenwirkenden Domäne existiert und, wenn dies der Fall ist, Zugriff zu dem gewünschten Datenausdruck in dieser Domäne,
(i i) wenn der gewünschte Datenausdruck in dieser zusammenwirkenden Domäne nicht existiert, prüfen, ob der gewünschte Datenausdruck in der Register-Domäne vorhanden ist, und, wenn dies der Fall ist, Zugriff zu dem gewünschten Datenausdruck in der Register-Domäne und Kopieren dieses Ausdruckes in die zusammenwirkende Domäne,
(iii) Verbessern oder Kreieren eines Datenausdruckes in dieser zusammenwirkenden Domäne, und
(iv) Prüfen, ob diese zusammenwirkende Domäne berechtigt ist, Fortschaltungen an der Register-Domäne durchzuführen, und, wenn dies der Fall ist, Kopieren des verbesserten oder kreierten Datenausdruckes in die Register-Domäne.

## Revendications

1. Système de traitement de données, dans lequel:
(a) le système est divisé logiquement en une pluralité de domaines coopérants (10) et un domaine de registre (14);
(b) chacun des domaines coopérants (10) est géré par un organisme séparé et comprend des moyens pour gérer sa propre sécurité, y compris la sécurité au niveau de la limite du domaine, qui permet ou interdit une interaction avec d'autres domaines;
(c) chacun des domaines coopérants (10) est le domaine de registre (14) retient un ensemble respectif d'éléments de données persistants; et
(d) chacun des domaines coopérants (10) inclut au moins un objet d'application (12) pour exécuter un traitement dans ce domaine;
**caractérisé en ce que** l'objet d'application (12) inclut des moyens pour exécuter le traitement suivant:
(i) vérifier si un élément de données requis existe dans ce domaine coopérant et, si c'est le cas, accéder à l'élément de données requis dans ce domaine;
(ii) si l'élément de données requis n'existe pas dans ce domaine coopérant, vérifier si l'élément de données requis existe dans le domaine de registre et, si c'est le cas, accéder à l'élément de données requis dans le domaine de registre et le copier dans ce domaine coopérant;
(iii) modifier ou créer un élément de données dans ce domaine coopérant; et
(iv) vérifier si ce domaine coopérant est un domaine de confiance pour apporter des mises à jour pour dans le domaine de registre et, si c'est le cas, copier l'élément de données modifié ou créé dans le domaine de registre.

2. Procédé pour faire fonctionner un système de traitement de données, selon lequel:
(a) le système est divisé logiquement en une pluralité de domaines coopérants (10) et un domaine de registre (14);
(b) chacun des domaines coopérants (10) est géré par un organisme séparé et comprend des moyens pour gérer sa propre sécurité, y compris la sécurité au niveau de la limite du domaine, qui permet ou interdit une interaction avec d'autres domaines;
(c) chacun des domaines coopérants (10) est le domaine de registre (14) retient un ensemble respectif d'éléments de données persistants; et
(d) chacun des domaines coopérants (10) inclut au moins un objet d'application (12) pour exécuter un traitement dans ce domaine;
**caractérisé en ce que** le procédé inclut les objets d'application (12) dans chacun des domaines coopérants (10) exécutant les étapes consistant à:
(i) vérifier si un élément de données requis existe dans ce domaine coopérant et, si c'est le cas, accéder à l'élément de données requis dans ce domaine;
(ii) si l'élément de données requis n'existe pas dans ce domaine coopérant, vérifier si l'élément de données requis existe dans le domaine de registre et, si c'est le cas, accéder à l'élément de données requis dans le domaine de registre et le copier dans ce domaine coopérant;
(iii) modifier ou créer un élément de données dans ce domaine coopérant; et
(iv) vérifier si ce domaine coopérant un domaine de confiance pour apporter des mises à jour pour dans le domaine de registre et, si c'est le cas, copier l'élément de données modifié ou créé dans le domaine de registre.
